# EUROPEAN PATENT SPECIFICATION

(11) **EP 0 709 797 B1**
(45) Date of publication and mention of the grant of the patent: **24.03.2004**
(21) Application number: 95116966.3
(22) Date of filing: 27.10.1995
(51) Int. Cl.: G06K 7/10

(54) **Laser scanning system and scanning method for reading bar codes**
Laserabtastsystem und Abtastungsverfahren zum Lesen von Streifencodes
Système de balayage laser et méthode de balayage pour la lecture de codes à barres

(30) Priority: 31.10.1994 US 332581
(43) Date of publication of application: 01.05.1996
(60) Divisional application: 03025625.9
(73) Proprietor: SYMBOL TECHNOLOGIES, INC., Bohemia New York 11716 (US)
(72) Inventor: Dvorkis, Paul, Stony Brook, NY 11790 (US); Barkan, Edward, Miller Place, NY 11764 (US); Charych, Harold, E. Setauket, NY 11733 (US); Giebel, James, East Northport, NY 11731 (US); Osterweil, Stephen, Plainview, NY 11803 (US); Kumar, Sundeep, E. Setauket, NY 11733 (US); Barile, John, Holbrook, NY 11741 (US); Poloniewicz, Paul R., E. Setauket, NY 11733 (US); Biuso, Anthony D., S. Setauket, NY 11720 (US); Chew, Steven M., East Northport, NY 11731 (US)
(74) Representative: Wagner, Karl H., Dipl.-Ing.

(56) References cited:
- US-A- 5 001 406
- US-A- 5 162 709
- US-A- 5 235 167

## Description

### BACKGROUND OF THE INVENTION

This invention relates generally to the design of scanning systems for reading bar code symbols or similar indicia, and more particularly, to scanning both one-dimensional and two-dimensional bar codes symbols automatically. Most conventional optical scanning systems can read either one-dimensional or two-dimensional bar code symbols. A bar code symbol is a coded pattern of indicia having a series of variable-width bars separated by variable-width spaces, the bars and spaces having different light-reflecting characteristics. One example of a one-dimensional bar code is the UPC/EAN code currently in use for identifying articles and other information. One example of a two-dimensional, or stacked, bar code is the PDF417 bar code described in U.S. Patent No. 5,159,639.

Most scanning systems, or scanners, generate a beam of light which reflects off a bar code symbol so the scanning system can receive the reflected light. The system then transforms that reflected light into electrical signals, and decodes those electrical signals to extract the information embedded in the bar code symbol. Scanning systems of this general type are described in U.S. Patent Nos. 4,251,798; 4,360,798; 4,369,361; 4,387,297; 4,409,470; and 4,460,120, all of which have been assigned to Symbol Technologies, Inc.

US-A-5 235 167 discloses a system for reading bar code symbols or the like, including one- or two-dimensional bar code symbols having a scanner for generating a laser beam directed toward a target and producing a narrow first raster scanning pattern that enables the user to manually aim and direct the beam to the location desired by the user and a second raster scanning pattern that increases in height which sweeps an entire symbol to be read, and a detector for receiving reflected light from such symbol to produce electrical signals corresponding to data represented by such symbol.

US-A-5 001 406 discloses that the operating speed of a brushless DC motor is maintained at a desired speed by controlling the voltage level of power supplied to the motor. The motor includes a rotor carrying permanent magnets, cooperating electromagnets contained in a stationary armature and Hall effect devices for sensing the operating speed and position of the rotor. Circuitry connected to the Hall effect devices generates angular sector signals corresponding to activation periods or periods during which power is applied to the electromagnets to operate the motor. A processor connected to one of the Hall effect devices monitors the operating speed of the motor and generates an error signal representative of the difference between the operating speed of the motor and a desired reference speed. A power supply is controlled by the processor to generate power having a voltage level corresponding to the error signal. Switching transistors are connected between the electromagnets and the circuitry for generating the angular sector signals to apply power from the power supply to each of the electromagnets during the entirety of its corresponding activation period to maintain the motor speed at the desired reference speed.

Also, attention is drawn to US-A-5 162 709 which discloses an apparatus for controlling a blower motor composed of a brushless motor which is operative to control the blower motor, in the pulse width modulation (PWM) mode, with a number of pulses which are inversely proportional to a setting speed so as to reduce the motor operation noise and power consumption. An appropriate selection of the waveform to be supplied to the blower motor or the disturbance of the exciting timing of an exciting coil of the blower motor is effective to prevent the occurrence of a resonance phenomenon caused by vibrations produced by the blower motor.

Because both one-dimensional symbols and two-dimensional symbols are currently being used, it would be simpler and more efficient if a single scanning system could not only distinguish a bar code symbol from other markings, such as text, but also decode the symbol whether it is one-dimensional or two-dimensional. This operation is particularly important when the bar code symbol is skewed relative to the scanning patterns of the scanner.

An additional problem for such scanning systems occurs when decoding two-dimensional bar code symbols. These symbols do not all have the same height, so the scanning system must expand its scanning pattern to cover the entire two-dimensional symbol. Some conventional systems do this but sometimes cover areas outside of the symbol. Although using such a large pattern does not affect the accuracy of the scanner, it is inefficient. The portions of the scanning pattern which lay outside the bar code symbol are useless, and scanning these areas slows down the scanning operation. In addition, forcing the scanning pattern to be too large reduces the accuracy of decoding the two-dimensional bar code symbol.

Building a system to overcome these problems is not only difficult, it is complicated by an additional concern. Scanners should not become any larger for ergonometric and economic reasons. Thus, more powerful and flexible scanning devices must be compact.

Another concern is speed. The additional processing needed for increased efficiency and flexibility must not come at the expense of speed. That processing must therefore proceed quickly and efficiently.

Yet another concern is the need to ensure that the different scanner subsystems communicate with each other effectively as they become more robust. Scanning systems typically have different subsystems, such as the scanning engine, the optical sensor, and the decoder. The interfaces between these different subsystems must support the required processing power and allow one to improve one part a scanning system without redesigning other systems.

To obtain a scanner with all these features is very difficult indeed. The fast-increasing use of bar codes, however, demands that scanning systems have increasing flexibility, robustness, and efficiency.

It is therefore an object of this invention to provide a scanner having an improved control of a scan element.

It is also an object of the invention to have such a scanner adapt itself to the different characteristics of the scanning elements.

### SUMMARY OF INVENTION

To achieve these objects, the present invention provides a scanner as set forth in claim 1.

Preferred embodiments of the present invention may be gathered from the dependent claims.

The present invention also provides a method of electro-optically reading coded indicia, as set forth in claim 9.

A microprocessor-controlled scan engine uses a coil both to drive a scanning element and to pick up feedback signals representing the motion of the scanning element. The scan engine also uses different circuit techniques to avoid degrading the system, and has a powerful interface to decoding and control logic of the scanner. The scan engine may be set to ensure that two-dimensional scanning patterns precess to move the scan lines at different portions of the bar code symbols to avoid any gaps that may otherwise occur.

Specifically, a scanner according to this invention comprises a pulse width modulation regulator, coupled to the coil, for causing a desired current to flow through the coil in accordance with an analog drive signal; a digital-to-analog converter, coupled to the pulse width modulation circuit, for creating the analog drive signal from a digital drive signal; and a controller, coupled to the digital-to-analog converter, for generating the digital drive signal.

### BRIEF DESCRIPTION OF DRAWINGS

The accompanying drawings provide a further understanding of the invention and, together with the description, explain the principles of the invention.
Fig. 1 is a simplified diagrammatic representation of one embodiment of a laser scanning system;
Fig. 2 is a block diagram of a scan engine;
Fig. 3 is a diagram showing the preferred construction of a PWM regulator used in the scan engine of Fig. 2;
Fig. 4 is a diagram showing switches used in the PWM regulator in Fig. 3;
Fig. 5a is a diagram of the frequency response for an RASE and mylar support which can be used with this invention;
Fig. 5b is a diagram showing the magnitude and phase variations as a function of frequency for the RASE;
Fig. 6 is a diagram of two sine waves to show coarse amplitude adjustment;
Fig. 7 is a diagram of two traces to show fine amplitude adjustment;
Fig. 8 is a graph showing the changes in the resonant frequency of an RASE with temperature;
Fig. 9 is a diagram illustrating how the sum of the sine waves for the digital drive signal shown in Fig. 12 is formed;
Fig. 10 is a flow chart of the operation for motor control of the scan engine in Fig. 2;
Fig. 11 is a flow chart of the procedure for generating raster scans;
Figs. 12a-12c are different perspective views of a preferred assembly for the scan engine shown in Fig. 2;
Fig. 13a-13c shows a scanning pattern and it precesses;
Fig. 14 is a block diagram of the scan engine in Fig. 2 and its interfaces with other subsystems;
Fig. 15 is a diagram of the preferred formats for commands and messages exchanged with the scan engine shown in Fig. 2;
Fig. 16 is a list of the commands and messages exchanged using the format of Fig. 15.

### DESCRIPTION OF THE PREFERRED IMPLEMENTATIONS

The following description of the preferred implementations of this invention do not describe all possible implementations. In the description, like reference numerals in different figures refer to like parts, unless indicated otherwise.

### A. Overview

Unless the context or specific instructions indicate otherwise, the terms "symbol" and "bar code" should be construed broadly in this specification and the following claims. For example, those terms cover any number of patterns having alternating bars and spaces, including those of various widths, and one-dimensional or two-dimensional graphic patterns other than those specifically mentioned.

The present invention relates to scanning systems including those that can automatically initiate and terminate scanning of a target. Some scanning systems with this automatic capability use a manually-operated trigger to initiate scanning of the target, such as U.S. Patent No. 4,387,297 describes. Although the trigger is important for many applications, some applications benefit from other techniques, and this invention includes such techniques.

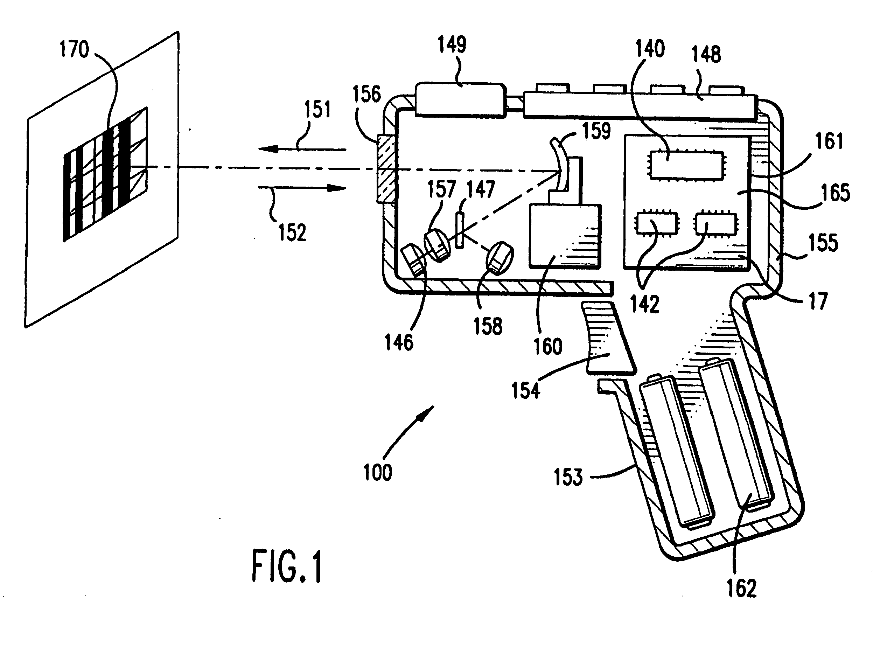

Fig. 1 shows a highly simplified embodiment of a bar code scanner 100 that may be constructed according to the principles of the present invention. Although Fig. 1 shows scanner 100 as hand-held, the invention does not require that the scanner be in this form. For example, the scanner could include a desktop workstation or have some other type of stationary architecture. Scanner 100 may also function as a portable computer terminal and include a keyboard 148 and a display 149, such as described in U.S. Patent No. 4,409,470.

Hand-held scanner 100 of Fig. 1 has the style described generally in U.S. Patent Nos. 4,760,248 or 4,896,026, both assigned to Symbol Technologies, Inc. Scanner 100 also has a similar design to the bar code reader commercially available as part number LS 8100 or LS 2000 from Symbol Technologies, Inc.

A user aims scanner 100 at bar code symbol 170 without physically touching it. Typically, scanner 100 operates several inches from the bar code symbol being read.

To construct scanner 100, the ordinary-skilled artisan may refer to U.S. Patent Nos. 4,387,297; 4,409,470; 4,760,248; 4,896,026; and 4,387,298. To assist in the understanding of the claimed invention, however, the major features of scanner 100 are described below.

Scanner 100 is preferably gun-shaped in a housing 155 having a pistol-grip handle 153. A movable trigger 154 on handle 153 allows a user to activate a light beam 151 and associated detector circuitry when the user has pointed scanner 100 at a symbol 170.

Housing 155, which is preferably made of lightweight plastic, contains laser light source 146 (which may be a semiconductor laser diode or other light source), lens 157, partially-silvered mirror 147, detector 158, oscillating mirror 159, motor 160, power source (battery) 162, and signal processing and control circuitry 165. Circuitry 165 includes CPU 140 and decoding and control electronics 142 on a printed circuit board 161.

When a user activates scanner 100 by pulling trigger 154, light source 146 generates light beam 151 along the axis of lens 157. Lens 157, which is not necessary in all embodiments, may be a single lens or a multiple lens system. After passing through lens 157, beam 151 passes through partially-silvered mirror 147 and, if desired, other lenses or beam-shaping structures. Beam 151 then strikes oscillating mirror 159 driven by scanning motor 160, which together direct beam 151 in a scanning pattern. Preferably, motor 160 also starts when the user pulls trigger 154.

If light beam 151 is invisible, the optical system may include an aiming light parallel to beam 151 to help the user aim scanner 100. The aiming light is a visible beam of light that may either be fixed or follow light beam 151.

Mirror 159 directs light beam 151 through a light-transmissive window 156 and across bar code symbol 170 in some predetermined pattern, such as a linear raster scan pattern.

Symbol 170 can be a one-dimensional bar code, such as the standard UPC/EAN code, or a two-dimensional bar code, such as PDF417 described in U.S. Patent No. 5,159,639. In addition, as explained above, symbol 170 can be any other acceptable symbol carrying information to be decoded.

Light beam 152 is the light from beam 151 reflected off symbol 170. Beam 152 returns to scanner 100 along a path parallel to, or at times coincident with, beam 151. Beam 152 thus reflects off mirror 159 and strikes partially-silvered mirror 147. Mirror 147 reflects some of beam 152 onto a light-responsive detector 158 that converts light 152 into electrical signals.

The electrical signals then pass into signal processing and control circuitry 165 to be processed and decoded to extract the information represented by the bar code. Signal processing and control circuitry 165 also controls the operation of motor 160 to adjust the scanning pattern and provide other control.

### B. Scanning Control

### 1. Scanning element control

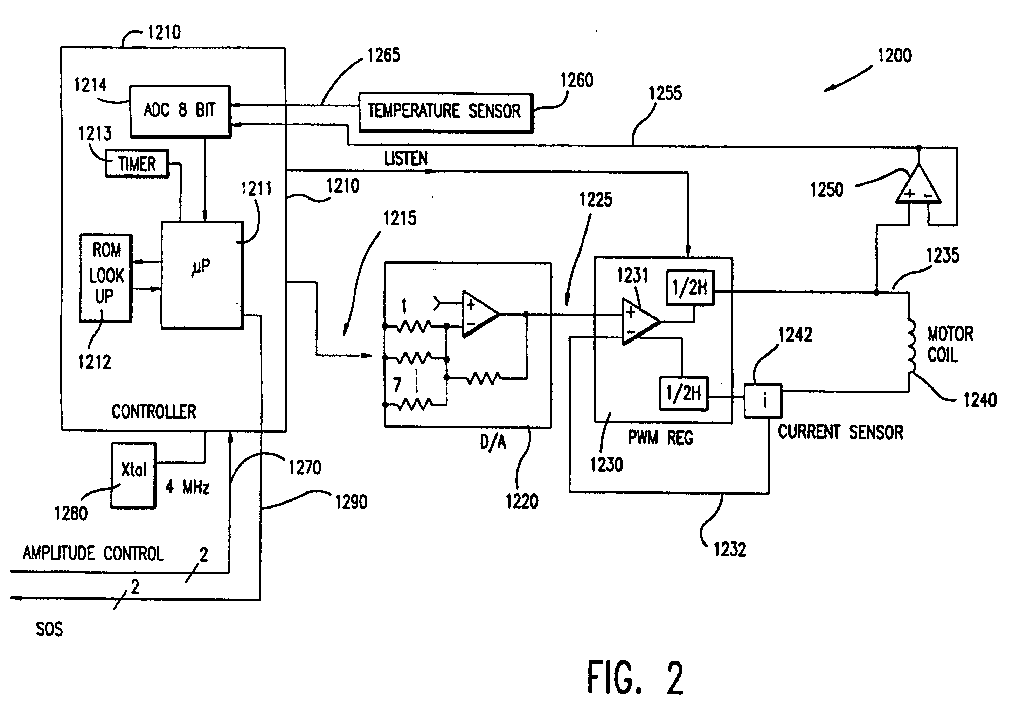

Fig. 2 shows the details of a scan engine 1200 in accordance with this invention that is both flexible and efficient. Scan engine 1200 can be used with the scanner subsystems described in this specification or with different subsystems.

As Fig. 2 shows, scan engine 1200 has three major components: controller 1210, digital-to-analog (D/A) converter 1220, and PWM regulator 1230. PWM regulator 1230 controls a motor coil 1240 that drives a scanning element (not shown) and provides feedback to controller 1210 via amplifier 1250.

Controller 1210, which is preferably a PIC16C71 manufactured by Microchip Technology, Inc., forms and sends a digital drive signal 1215 to D/A converter 1220. Digital drive signal 1215 is actually a series of 7-bit digital numbers corresponding to voltage values of a signal to drive coil 1240. As explained in greater detail below, digital drive signal 1215 is preferably the sum of two sine waves, one to drive the horizontal or X-axis deflection, and one to drive the vertical or Y-axis deflection.

D/A converter 1220 generates analog linear control voltage signal 1225 from digital drive signal 1215, and provides analog drive signal 1225 as an input to PWM regulator 1230. D/A converter 1220 appears conceptually as a ladder-type converter because such converters can be made very compact. Other converter designs will work as well, however.

PWM regulator 1230, which includes comparator 1231, creates a current drive signal 1235 from analog drive signal 1225, and sends current drive signal 1235 through coil 1240. The shape of current drive signal 1235 resembles that of analog voltage drive signal 1225, so in one sense, PWM regulator 1230 acts as a voltage-to-current converter.

Coil 1240 creates a magnetic field proportional to current drive signal 1235. That magnetic field causes a RASE (Resonant Asymmetric Scan Element) to oscillate horizontally and a mylar support of the RASE to oscillate vertically. In this manner, the RASE and its support act as scanning mirror 159 (Fig. 1) does. The RASE and its support are described in U.S. Patent No. 5,280,165.

The RASE has a high Q allowing it to continue oscillating even after the driving magnetic field stops. The preferred implementation takes advantage of this feature by periodically stopping the active driving of coil 1240. The RASE continues oscillating, however, and coil 1240 then acts as a passive sensing element picking up information about the amplitude and the phase of the moving RASE.

Amplifier 1250, which is connected as a buffer, converts the signals from coil 1240 to amplitude and phase feedback signal 1255, an input to controller 1210. Controller 1210 uses feedback signal 1255 to ensure that it is properly driving coil 1240.

A temperature sensor 1260 provides a second input, temperature signal 1265, to controller 1210. Signal 1265 represents the ambient temperature proximate to scan engine 1200.

Sensor 1260 measures the ambient temperature for two reasons. One is to calibrate engine 1200 to account for changes due to temperature. The other purpose is to alert controller 1210 to stop operations if the ambient temperature is outside of a safe operating range.

A third input for controller 1210 is the two-wire (clock plus data) serial ZIF interface 1270. As will be explained in greater detail below in the section entitled "Scan engine interface," this interface allows controller 1210 to receive commands from the rest of the scanner and send information to the scanner.

The remaining input to controller 1210 is an external clock 1280. Clock 1280 generates a signal at the frequency required by the preferred embodiment of controller 1210.

In addition to ZIF interface 1270 and digital drive signal 1215, controller 1210 also sends out two other signals. One is a "Listen" signal 1234 to tell PWM regulator 1230 to stop generating current drive signal 1235, thereby turning coil 1240 into a pickup device.

A second signal sent by controller 1210 is the Start of Scan or SOS signal 1290. As explained above, the SOS signal indicates when and in what direction the RASE is being driven horizontally.

In the preferred embodiment, controller 1210 contains a microprocessor 1211, a look up ROM 1212, an internal timer 1213, and an analog-to-digital (A/D) converter 1214. Microprocessor 1211 includes an arithmetic logic unit and internal memory. ROM 1212, which is preferably programmable, provides tables of data and routines to control the operations of microprocessor 1211. Timer 1213 is an interrupt timer that microprocessor 1211 uses to control real-time operations. A/D converter 1214 converts the analog temperature, amplitude, and phase information into a digital format for microprocessor 1211.

When operating in its normal mode, controller 1210 produces seven-bit digital drive signal 1215 representing the sum of two sine waves. One is approximately 290 Hz and the other is approximately 15 Hz. The 290 Hz signal is used to drive the X-axis deflection of the RASE, and the 15 Hz signal is used to drive the Y-axis deflection of the mylar support.

Controller 1210 can change digital drive signal 1215 as needed. For example, controller 1210 constantly monitors feedback signal 1255 to determine whether to change the amplitude or frequency of digital drive signal 1215. In addition, controller 1210 can produce a signal with a different shape or different frequencies to accommodate other equipment.

D/A converter 1220 continuously converts digital drive signal 1215 to analog drive signal 1225. An analog drive signal allows scan engine 1200 to operate accurately at higher frequencies. To understand why requires an understanding of PWM regulator 1230.

PWM regulator 1230 receives analog drive signal 1225 at a non-inverting input of comparator 1231 and receives a current feedback signal 1232 at the inverting input of comparator 1231. Current sensor 1242 generates current feedback signal 1232 as a voltage signal corresponding to current drive signal 1235. Constructing PWM regulator 1230 in this manner forces regulator 1230 to make current drive signal 1235 track analog drive signal 1225.

This design of PWM regulator 1230 has two advantages over a conventional voltage drive circuit. First, voltage drivers require a very large voltage supply to counteract the back end of coil 1240. PWM regulator 1230 does not because it is a current driver.

Second, a voltage driver can reduce the high Q of the RASE by forcing through coil 1240 signals that are not at the coil's resonant frequency. The preferred embodiment of regulator 1230 does not reduce the Q of the RASE because the feedback component ensures that the RASE is driven at the resonant frequency.

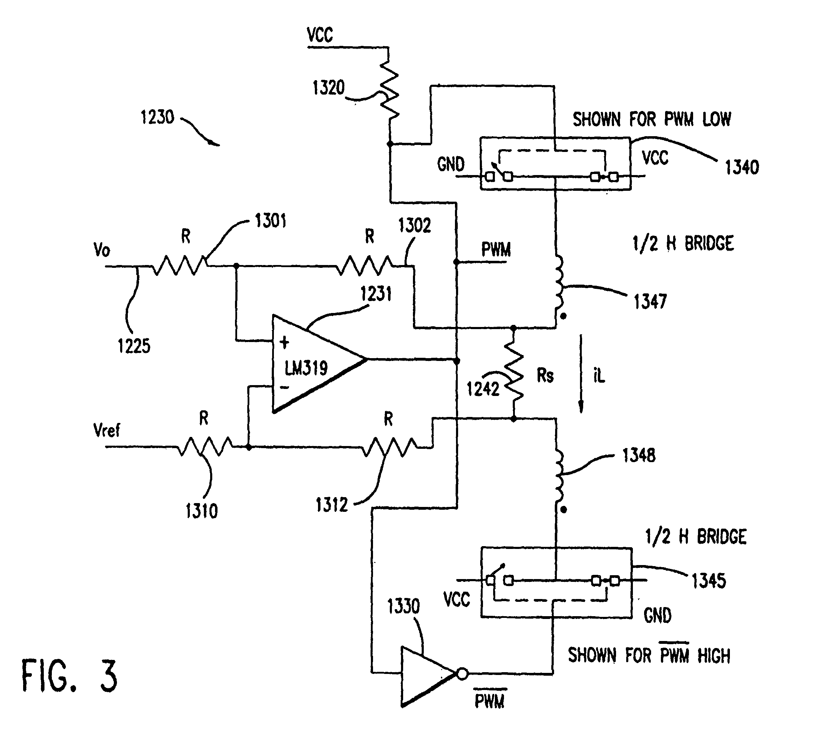

Fig. 3 shows the preferred construction of PWM regulator 1230 in greater detail. Analog drive signal 1225, shown as Vo, enters the non-inverting input of operation comparator 1231 via resistor 1301. The inverting input of comparator 1231 connects to a reference voltage, Vref, via resistor 1310.

The output of open collector comparator 1231, which is pulled up to control voltage Vcc via resistor 1320, produces a PWM signal that inverter 1330 uses to form an inverted PWM signal. The PWM signal controls a switch 1340, and the inverted PWM signal controls a switch 1345. Switches 1340 and 1345 connect to opposite sides of coil 1240 to form a ½H bridge.

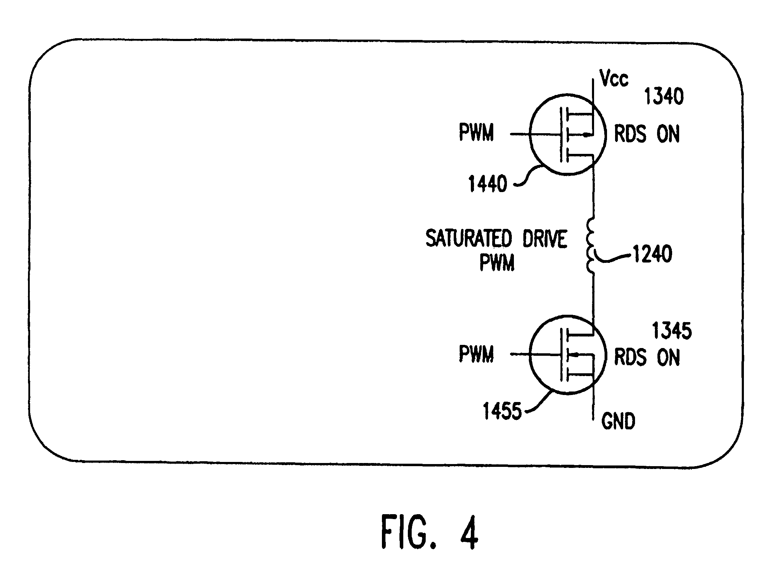

Fig. 4 shows that switches 1340 and 1345 are preferably transistors 1440 and 1455, respectively. Transistors 1440 and 1455 act as switches because they are in one of two states: saturated or nonconducting. Using transistors in this manner reduces the rds (resistance from drain to source) loss, and is more efficient than using transistors in their active regions as linear drives. The PWM regulator shown in Figs. 3 and 4 is about twice as efficient as a linear drive. Moreover, this PWM regulator produces a switching frequency greater than 100 KHz, thereby minimizing the switching frequency current components in the motor coil.

Switches 1340 and 1345 alternately switch on and off to create a high-frequency PWM pulse train across coil 1240. The inductance of coil 1240 integrates this pulse train to produce in coil 1240 a piecewise linear current proportional to the D.C. component of the pulse train. This time-varying current approximates the summed sine waveform of analog signal 1225.

Fig. 3 shows that in the preferred embodiment, coil 1240 is split into two serially-connected sections, 1347 and 1348 separated by current sensing resistor Rs 1242. One side of Rs 1242 connects through resistor 1302 to the non-inverting input of amplifier 1231, and the other side of sensing resistor 1242 connects through resistor 1312 to the inverting input of amplifier 1231. The sizes of the resistors are chosen so that the current through coil 1240, i_{L}, approximately equals (Vo-Vref)/Rs.

Coil 1240 generates a magnetic field with the same shape as current drive signal 1235, the sum of the 290 Hz and 15 Hz sine waves. The RASE mechanically filters out the lower frequency portion of the magnetic signal, and the mylar support mechanically filters out the higher frequency portion.

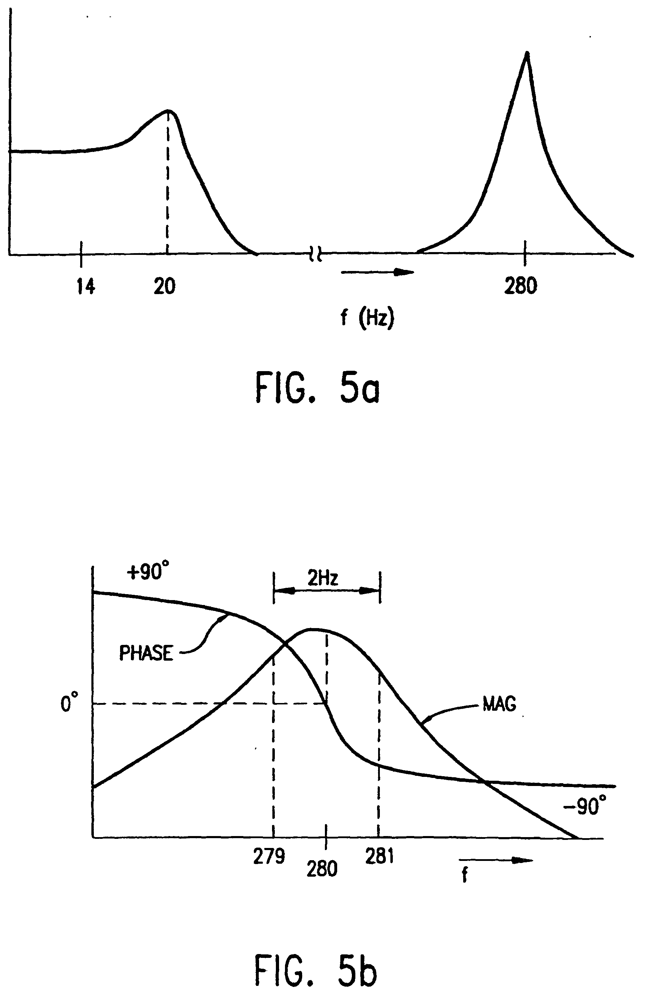

Fig. 5a shows the frequency response for the RASE and its mylar support to demonstrate the mechanical filtering. As is apparent, the mylar support will only respond to the lower frequency signals, and the RASE will only respond to signals in a narrow band around 280Hz.

Fig. 5b demonstrates the high Q (about 500) of a RASE whose resonant frequency is 280Hz. The values for the magnitude and phase differ markedly as a function of frequency.

To drive the RASE with such a high Q requires careful feedback monitoring. Microprocessor 1211 performs such monitoring by extracting from the digitized feedback signal maximum amplitude and phase (or frequency) information. The preferred mode for feedback monitoring involves taking periodic measurements at the same relative phase of digital drive signal 1215. In the preferred implementation, microprocessor 1211 takes a feedback measurement once every 19½ cycles of the x-axis drive, and times the measurements to begin at zero-crossing and end at the maximum amplitude or quarter-cycle point. If the measured value differs from the intended value, controller 1210 is out of phase with the RASE, and microprocessor 1211 changes the frequency to correct this condition.

To correct the amplitude and frequency values of signal 1215, microprocessor 1211 uses several values set during calibration at the factory. This is the preferred time to insert baseline values into ROM 1212.

Of course the values stored in ROM 1212 at calibration may not always remain accurate. Changes in temperature, the RASE, or other factors might require microprocessor 1211 to generate different values for driving signal 1215. This is why microprocessor 1211 makes adjustments based on feedback. To make adjustments, microprocessor 1211 obtains from ROM 1212 two sets of amplitude values for X-axis deflection and one frequency (or sine wave period) setting. In the preferred embodiment there is no Y-axis adjustment, just a set of amplitude values for X-axis adjustment. To correct Y-axis deflection, however, ROM 1212 could contain an additional set of amplitude values.

For the X-axis deflection, ROM 1212 includes baseline values representing the maximum deflection, and coarse amplitude adjustment values. The coarse adjustment values are five percent of the corresponding baseline values. In the preferred embodiment, each set of values for the high frequency or X-axis signal has sixteen entries, and,each set of values for the low frequency or Y-axis signal has twenty-six entries. In the preferred embodiment, the values represent successive values for sine waves.

The frequency value tells microprocessor 1211 how often to send out new values for the digital drive signal 1215. For example, for a 300 Hz sine wave, microprocessor 1211 would have to send out a complete set of values every 1/300 Hz or 3.33 ms. If a complete set included sixteen values, microprocessor 1211 would need to provide a new value every 3.33ms/16, or 208 µs. Preferably, interrupt timer 1213 is set to the value necessary to generate the digital drive signal 1215 at the desired frequency.

Microprocessor 1211 makes frequency adjustments by loading a new value into interrupt timer 1213. Amplitude adjustments are not very complicated either. Microprocessor 1211 forms new values for signal 1215 by subtracting values using coarse adjustment values from the baseline and then using a fine adjustment technique.

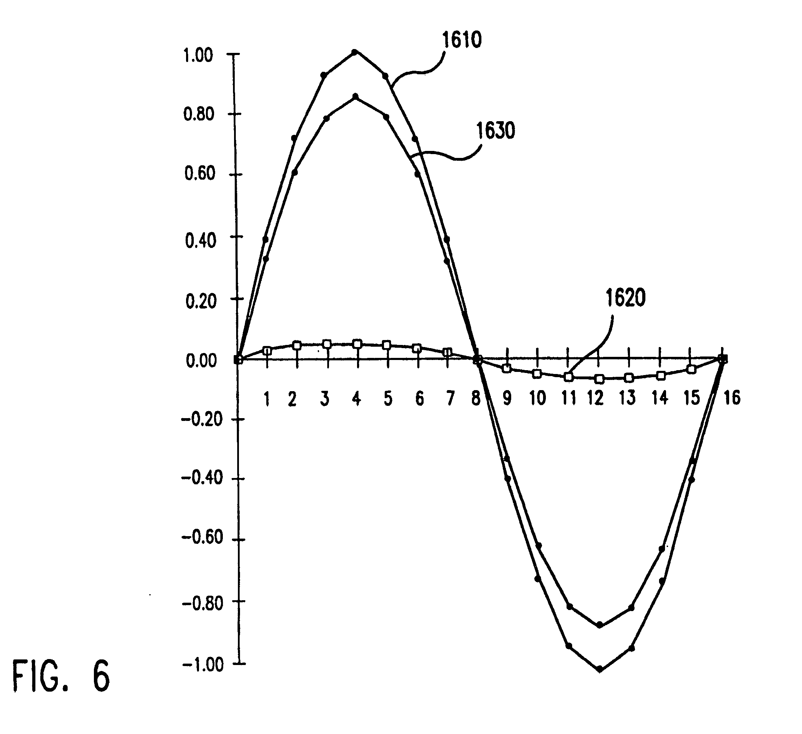

Fig. 6 illustrates how coarse adjustments are made. Trace 1610 contains several baseline amplitude values, and trace 1620 contains several coarse adjustment values to be subtracted from the baseline values. For example, to form an amplitude signal fifteen percent lower than the baseline, shown as trace 1630, microprocessor 1211 subtracts the coarse adjustment values (each at five percent of the corresponding baseline value) from the baseline values three times.

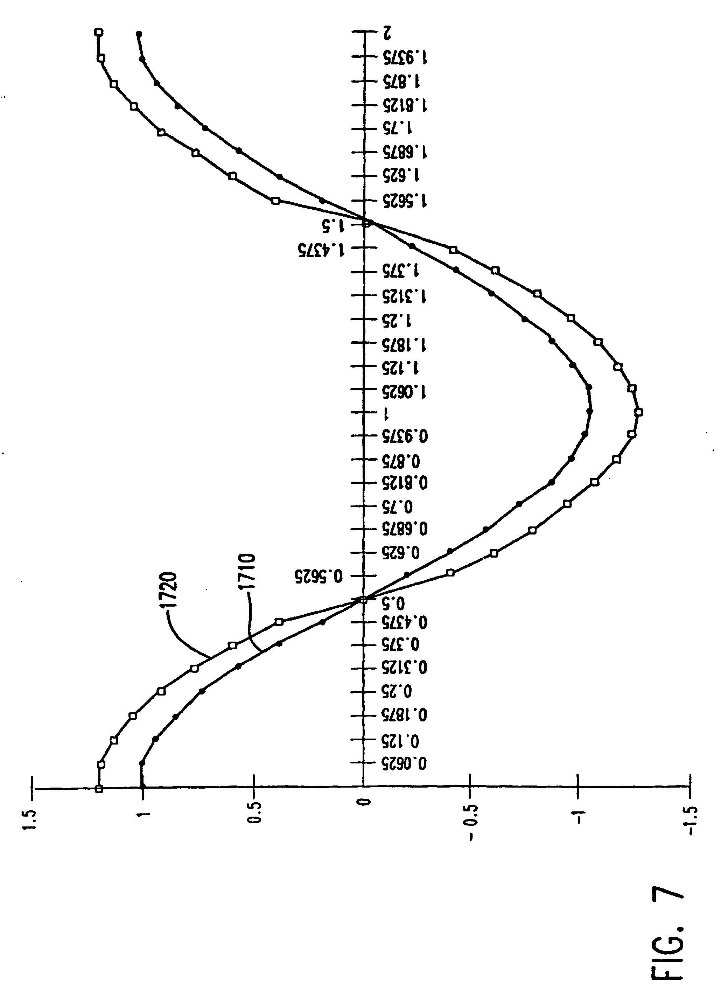

Fig. 7 shows how fine adjustments are made in the preferred implementation. Fine adjustment also requires repeated subtraction, but instead of using a percentage of baseline values, microprocessor 1211 uses a fixed offset. The offset is positive when the baseline value is positive, negative when the baseline value is negative, and zero when the baseline value is zero. Fine adjustment transforms trace 1710 into trace 1720. The fine adjustment tends to distort the sine waveform slightly, but with little noticeable effect.

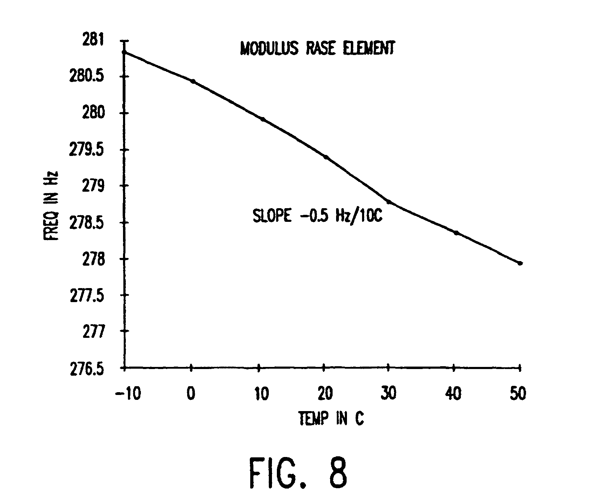

In addition, during calibration, microprocessor 1211 uses the ambient temperature signal 1265 to adjust the frequency of the RASE according to the temperature. Fig. 8 shows a typical relationship between temperature in degrees centigrade and resonant frequency in Hz for a RASE. Because the RASE has such a high Q value, it is important to ensure proper temperature compensation.

In the preferred embodiment, microprocessor 1211 forms the values for the higher frequency sine wave as described above, by determining a new voltage value whenever interrupt timer 1213 generates an interrupt signal. Microprocessor 2111 forms a new value for the lower frequency sine wave by accessing ROM 1212 after obtaining some predetermined number of new values for the higher frequency signal. For example, to form a 15 Hz signal from a table with twenty-six values, microprocessor 1211 retrieves a new value for the lower frequency signal every .75 cycles of a 300 Hz higher frequency signal.

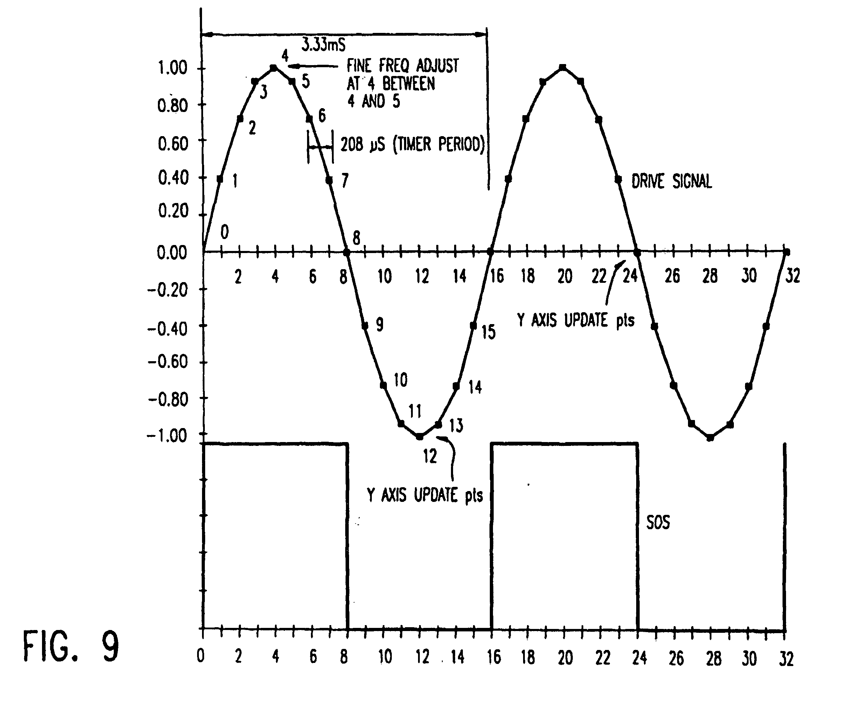

Fig. 9 demonstrates the formation of a high frequency sine wave for a 300 Hz signal with sixteen values, and a low frequency sine wave with a new value every .75 cycles (or every twelve values) of the high frequency sine wave. As explained above, for a 300 Hz signal with sixteen values, microprocessor 1211 would receive an interrupt every 208 us. Fig. 9 also shows the relationship between the SOS signal and digital drive signal 1215. The level of the SOS signal indicates the polarity of the drive signal 1215, and thus the direction of the scan.

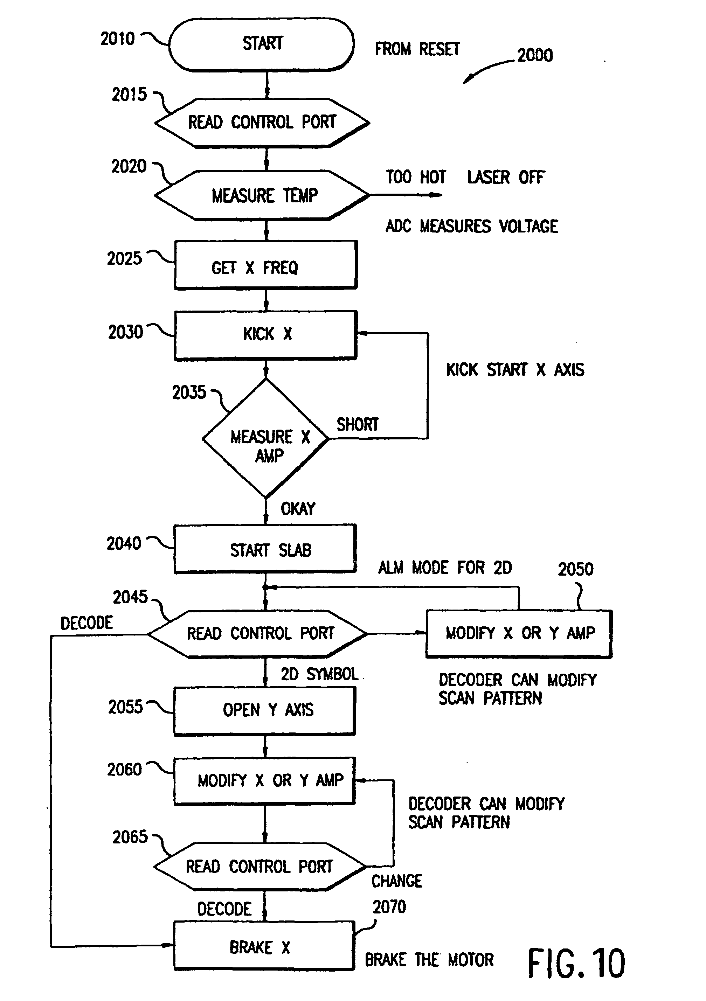

This basic understanding of the key components of scan engine 1200 permits an overview of the entire operation of scan engine 1200. Fig. 10 contains a flow diagram 2000 showing the operations necessary for motor control.

First, the procedure is started either initially or after some sort of reset. (Step 2010) Next, microprocessor 1211 reads the input port from the serial interface 1270 to see what commands to perform. (Step 2015) The first command will likely set some initial values.

Microprocessor 1211 then measures the temperature. (Step 2020) If the temperature is too hot, then controller 1200 sends a LASER OFF signal to shut down the scanner. Otherwise, the procedure continues, and microprocessor 1211 sets the frequency (*i.e.*, period) for the X-axis. (Step 2025)

Next, the X-axis scan starts by providing a maximum input or "kick." (Step 2030) Microprocessor 1211 then measures the maximum amplitude for the X-axis. (Step 2035) The "kick" continues until the maximum X-axis amplitude reaches the baseline value. At this point, the Y-axis signal deflection starts. (Step 2040)

Next, microprocessor 1211 reads the control port again to get the next command. (Step 2045) If the command is to modify the X or Y amplitude, then the modification is accomplished (Step 2050), and the control port is queried again for another command. (Step 2045)

If the command indicates that the symbol is two dimensional, microprocessor 1211 opens the Y-axis to increase the height of the scanning pattern. (Step 2055) After doing so, microprocessor 1211 modifies the X or Y amplitudes to reflect the change in the scanning pattern. (Step 2060) Afterwards, microprocessor 1211 reads the control port for another command. (Step 2065)

If the command indicates that the scan pattern needs to be modified again, then microprocessor 1211 complies (Step 2060), and reads the control port for the next command. (Step 2065)

At this point, or during an earlier read of the control port (Step 2045), the controller 1210 may receive a command indicating a decode to check the scan engine 1200. In response, microprocessor 1211 brakes the RASE (Step 2070), and waits for the next operation. Preferably, microprocessor 1211 brakes the RASE by driving it 180 degrees out of phase.

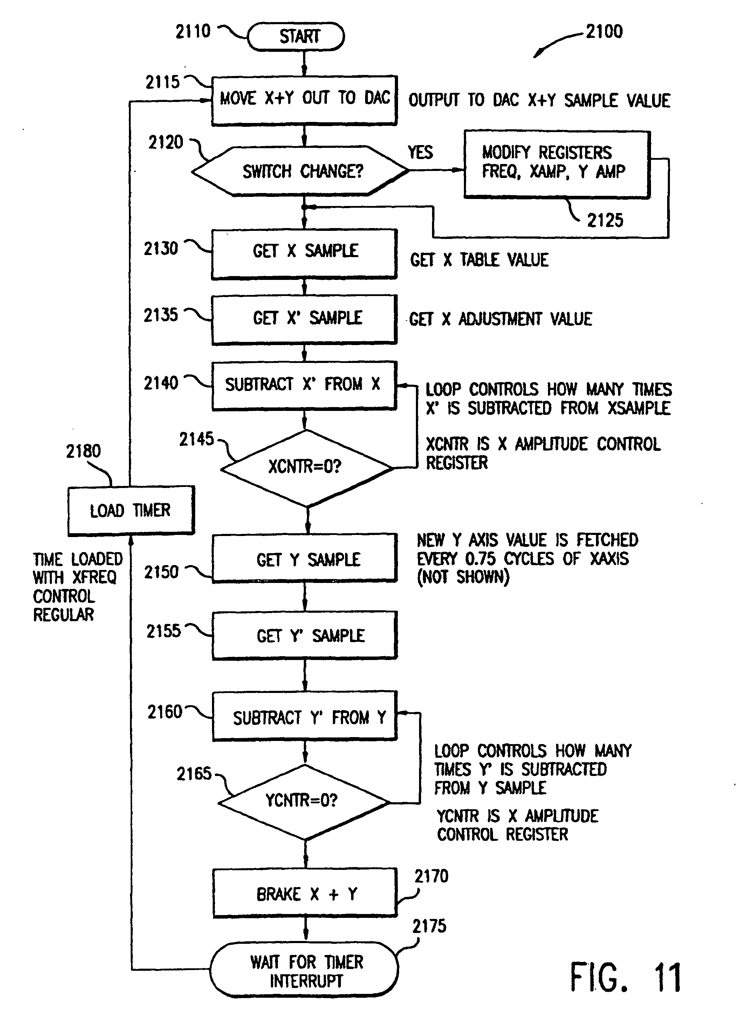

Fig. 11 contains a flow diagram 2100 showing the steps for generating the proper raster scans. After starting (Step 2110), microprocessor 1211 sends the summed sine wave signals to D/A converter 1220. (Step 2115) This will initiate or continue scanning.

Next, microprocessor 1211 determines whether it needs to change the amplitude or frequency values in response to a command from the control port. (Step 2120) If so, microprocessor 1211 modifies the appropriate registers for frequency, X-axis amplitude, or Y-axis amplitude. (Step 2125)

After modifying the registers, or if no change is required, microprocessor 1211 retrieves the next baseline value for the X-axis (Step 2130), and gets the corresponding coarse and fine adjustment values (collectively X'). (Step 2135)

Then a loop begins in which the X' adjustment values are repeatedly subtracted from the X baseline value (Step 2140) a number of times equal to a stored value "xcntr." (Step 2145) Xcntr indicates how much the baseline value needs to be modified. Next, microprocessor 1211 performs a similar set of operations for the Y-axis values. As explained above, this operation occurs every .75 cycles of the X-axis sine wave in the preferred embodiment. Similar to the X-axis loop, microprocessor 1211 retrieves the baseline value for the Y-axis (Step 2150) and the corresponding Y fine and coarse adjustment values Y'. (Step 2155) Next, microprocessor subtracts the Y' adjustment values (Step 2160) from the baseline Y value a number of times equal to "ycntr," a stored value similar to xcntr. (Step 2165)

After determining the adjusted X and Y values, microprocessor 1211 adds those values together. (Step 2170) Then it waits for a timer interrupt. (Step 2175)

When the interrupt occurs, microprocessor 1211 reloads a timer value into an X-axis frequency control register. The timer value is either a coarse frequency adjustment, which is preferably the value used between all but two sample points, or a fine frequency value, which is preferably the value used between two sample points to make minor frequency adjustments. (Step 2180) The entire process then repeats with the sum of the adjusted X-axis and Y-axis amplitude values being sent out to D/A converter 1220. (Step 2115)

To complete the understanding of this invention, it is useful to know the specific variables stored in ROM 1212 in the preferred implementation. During initial programming at the factory, technicians preferably assign a value of 30 for maximum Y amplitude variable. Microprocessor 1211 in scan engine 1200 determines coarse adjustment and fine adjustment from the value.

The technician enters the following 8-bit words into a calibration table location in the ROM 1212.
- Ymax:: Maximum Y amplitude (largest scanning pattern height)
- Ymin:: Minimum Y amplitude (smallest scanning pattern height)
- Xdrive:: X amplitude setting used at startup to generate coarse and fine adjustment values
- Fcrs:: Coarse frequency value (distance between all sample points except for adjustment points)
- FFine:: Fine frequency value (used during adjustment points)
- Phase:: Phase reference value for x axis frequency control (value use to find maximum value for phase measurement)
- Fback:: Amplitude reference used when examining the feedback signal
- Kcount:: Number of X-axis cycles to apply the Kick.

This is the only section of the program space of controller 1200 that changes for each scanner.

The calibration table area in ROM 1212 is large enough to support reprogramming. Preferably each scanner's calibration table can be programmed up to four times. To erase old table values, microprocessor 1211 overwrites the table space having those values with NOP instructions (00₁₆). It then writes the new calibration table into new, previously reserved memory locations of ROM 1212. When microprocessor 1211 accesses the calibration table, it skips the NOP instructions and increments a program counter until it finds the new table entries.

Usually, a technician need only reprogram the calibration table when a motor is replaced during servicing or if the alignment operator in the factory needs to correct motor alignment errors. In the factory, the scan engine is placed on an alignment fixture that automatically aligns the motor to produce calibration table values.

After a reset, microcontroller 1211 loads the calibration tables from ROM 1212 into a RAM in microprocessor 1211. As the section below entitled "Scan engine interface" explains, the RAM locations can be modified by using the Calibration Mode to effect "on the fly" scan pattern changes. In most cases, however, the scan engine interface allows dynamic scan pattern changes by having the decoder specify amplitudes and opening rates by through commands such as OPEN Y. The normal product commands do not change calibration values, however, and are not part of the Calibration Mode. Scan engine 1200 product commands into control variables microprocessor 1211 uses to manipulate baseline values.

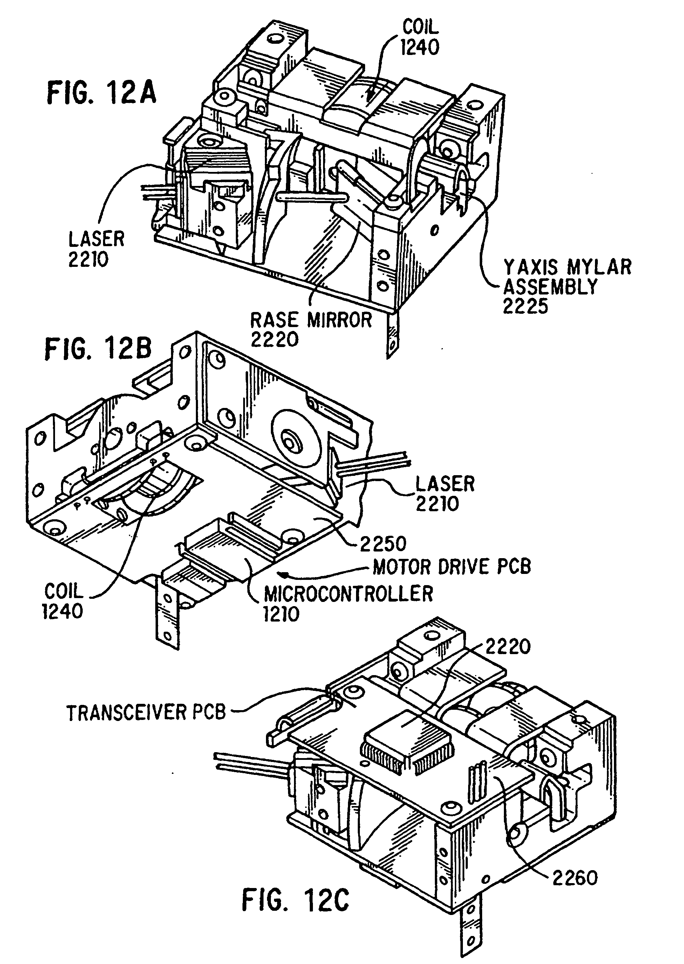

As is apparent from the foregoing description, the design of scan engine 1200 makes its scanning operation powerful and efficient. Another advantage of scan engine 1200 is that it requires very little room. Fig. 12a shows a perspective view of a preferred assembly containing a laser 2210, the RASE mirror 2220, the mylar assembly 2225, and motor coil 1240.

Fig. 12b shows a different perspective view from below the view in Fig. 12a, again showing the laser 2210, with the scan engine drive printed circuit board (PCB) 2250 mounted below laser 2210 and coil 1240. The scan engine drive PCB 2250, which contains the electronics shown in Fig. 2 has controller 1210 as its largest element.

Fig. 12c shows the relationship of the detector 2220 and its PCB 2260. The decoder circuitry is preferably located on a different PCB at another portion of the scanner.

### 2. Precession

Another feature of the preferred embodiment that is not readily apparent is the reason for choosing the lower frequency at 15 Hz. After all, Fig. 5a suggests several different frequencies would provide an adequate response. The reason for choosing 15 Hz is that the X-axis scanning frequency of 290 Hz is not an integer multiple of 15 Hz. The actual ratio is about 19.5.

When the X-axis scanning frequency is not an integer multiple of the Y-axis scanning frequency, the scanning pattern will tend to precess, or roll, because the movements along the two axes do not begin simultaneously. Although some may find such precession a disadvantage, it can actually be helpful in scanning different parts of a bar code symbol.

For example, a bar code may have some portions that are difficult to read or the rows may be closely packed. In that case, precession of the scanning pattern ensures that successive scans traverse different parts of the symbol and provide more accurate readings,

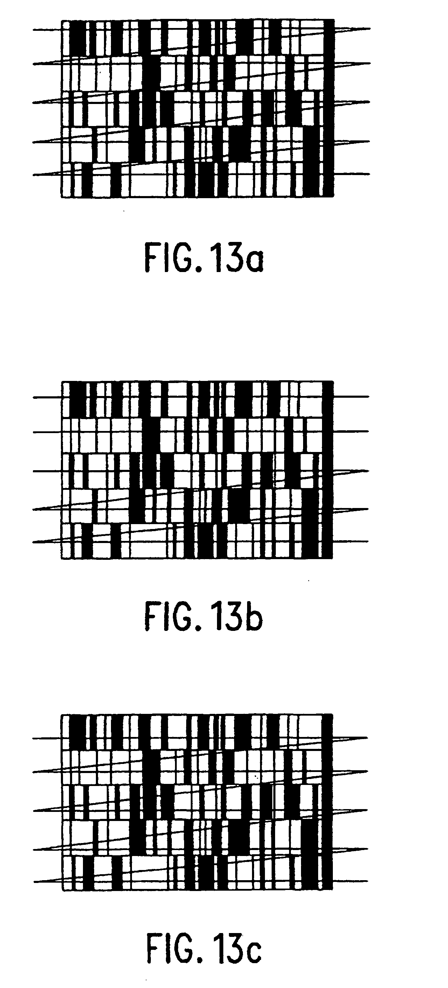

Fig. 13a-13c shows successive scanning patterns during precession. As the patterns demonstrate, the scans traverse different paths through the pattern to provide better overall coverage.

In the preferred implementation, the precession, whose rate depends on the ratio of the X-axis and Y-axis frequencies, is designed into each scanner. Proper programming of ROM 1212, such as during calibration, can change or even eliminate precession.

### 3. Scan engine interface

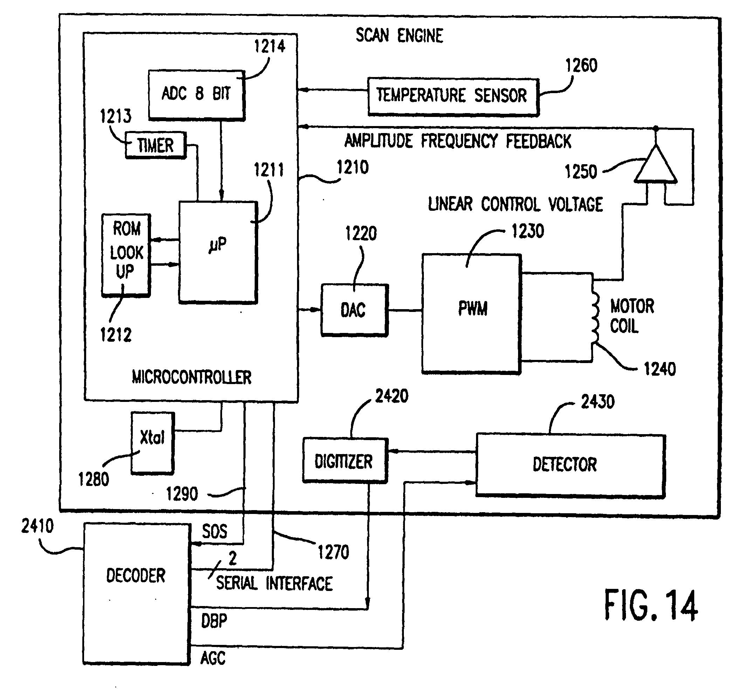

As the previous discussions suggest, scan engine 1200 must communicate with other portions of scanner 100. Fig. 14 is a block diagram showing the interfaces between scan engine 1200, decoder 2410, digitizer 2420, and optical detector 2430. In Fig. 14, optical detector 2430 receives the reflected light and outputs electrical signals reflecting the levels of received light. Digitizer 2420 forms the DBP signals discussed above from those electrical signals.

Decoder 2410 represents the circuitry for both decoding the bar code data and controlling the operation of scanner 100. As Fig. 14 shows, decoder 2410 receives SOS signal 1290 from scan engine 1200, and exchanges commands and data with microprocessor 1211 via ZIF serial interface 1270. Decoder 2410 also receives DBP data from digitizer 2420 and sends automatic gain control signals back to detector 2430 to ensure high quality resolution.

Most of the signals and interfaces shown in Fig. 14 have been described above. An important one which has not is the ZIF serial interface 1270. The interface is very powerful because it allows scan engine 1200 to operate with the rest of scanner 100 and produce the advantages listed in the prior description.

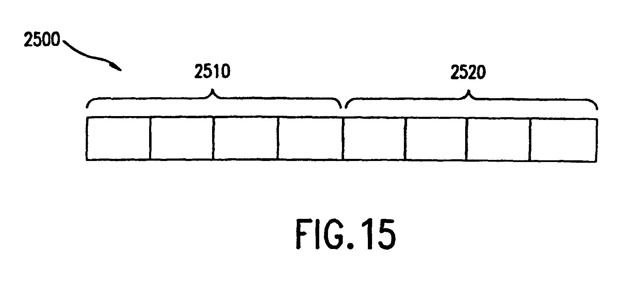

Fig. 15 shows a preferred format for the commands and messages exchanged over ZIF interface 1270. The commands and messages are sent in eight-bit bytes 2500. Each byte has two four-bit nibbles, shown as nibble 2510 and nibble 2520. Nibble 2510 preferably carries the command and message identifier, and nibble 2520 carries any data required by the message of the command.

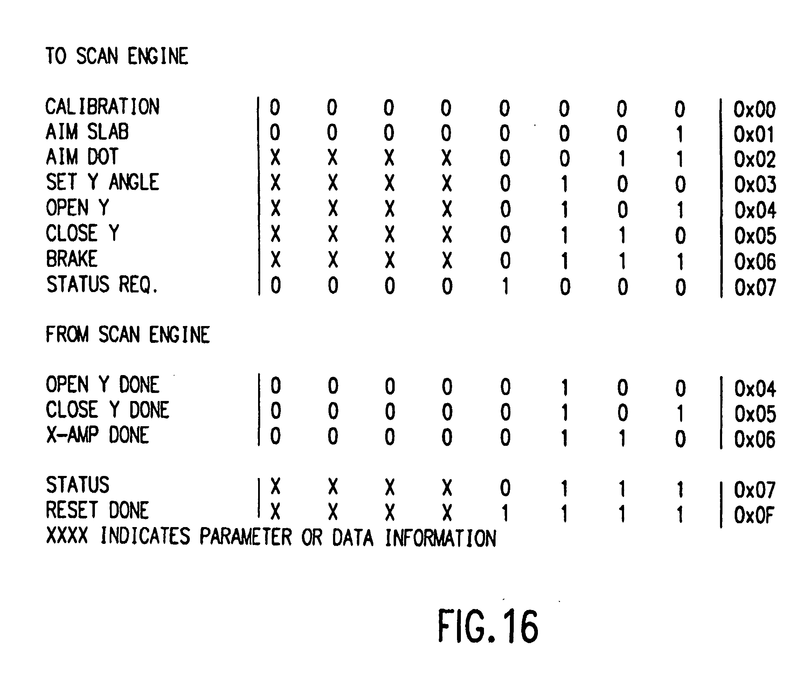

Fig. 16 shows a list of the commands and messages exchanged over ZIF serial interface 1270 between scan engine 1200 and decoder 2410 in the preferred embodiment. There are eight commands from decoder 2410 to scan engine 1200 and five messages from scan engine 1200 to decoder 2410.

The CALIBRATION command is principally used in the factory to calibrate scan engine 1200. In the preferred embodiment, microprocessor 1211 only responds to the CALIBRATION command if the SOS signal 1290 is low. If not, microprocessor 1211 will ignore this command.

The specific purpose of calibrating is to change or read the RAM in microprocessor 1211. Calibration provides a first approximation of the scanning element parameters that are later adjusted on feedback.

Nibble 2520 in the CALIBRATION command can indicate that the RAM mode should be read (0001), that the RAM mode should be written (0000), or that the calibration mode should be exited (0010). If the scan engine is already in the calibration mode, additional modes, such as read, write or exit, can be set without holding SOS signal 1290 low.

To change the contents of a RAM address, decoder 2410 places scan engine 1200 in the Write RAM Calibration mode and sends it to the desired RAM address (one byte). In response, scan engine 1200 echoes the address to decoder 2410, which then checks whether the echo was correct. Next, decoder 2410 sends data for that RAM address, and scan engine 1200 echoes the data for decoder 2410 to check.

To read a RAM location, decoder 2410 places scan engine 1200 in the Read RAM Calibration mode and sends the desired address of the RAM (one byte). In response, scan engine 1200 sends back the data from the indicated RAM address.

These two mechanisms allow decoder 2410 to change the parameters of scan engine 1200 dynamically. For example, this is how decoder 2410 could change the X-axis and Y-axis amplitudes during scanning.

The AIM SLAB command tells scan engine 1200 to place the scan element into a predefined pattern for aiming or initial acquisition. This command does not control the laser, however.

The AIM DOT command tells scan engine 1200 to place the scan element into a predefined pattern for dot aiming in the sunlight. This command also does not control the laser.

The SET Y ANGLE command tells scan engine 1200 the maximum angle to open in the Y direction in response to an OPEN Y command later issued. This command has data in nibble 2520 identifying one of sixteen possible angles.

The OPEN Y command tells scan engine 1200 to open the Y raster pattern at one of sixteen possible opening rates. The rate is encoded in nibble 2520. If the OPEN Y command is sent without a SET Y ANGLE command, scan engine 1200 will select as a default the maximum angle. If another angle is desired, the OPEN Y command should immediately follow the SET Y ANGLE command.

The CLOSE Y command tells scan engine 1200 to close the Y raster pattern. The rate is encoded in nibble 2520 and can have one of sixteen possible values.

The BRAKE command tells scan engine 1200 to apply braking to the X motion, the Y motion, or both. Parameters in nibble 2520 indicate which motion should be braked.

The STATUS REQUEST command asks for status from scan engine 1200. The scanner responds with the current status of the scan element and the laser.

The OPEN Y DONE message is a status message that scan engine 1200 has reached the maximum programmed Y opening. This message only follows an OPEN Y command.

The CLOSE Y DONE message is a status message sent when scanning engine 1200 finishes closing the raster in the Y direction. It only follows a CLOSE Y command.

The STATUS message is scan engine 1200's response to a STATUS command. It indicates the status of the laser and the scan element in nibble 2520.

The RESET DONE message is sent following a successful power up, and indicates that scan engine 1200 may now receive commands on ZIF serial interface 1270. Nibble 2520 contains the version number of the scan engine software executed by microprocessor 1211.

## Claims

1. A scanner (100) for electro-optically reading coded indicia (170), and including an oscillatable scan element (2220) for directing a light beam to the indicia (170), and a drive arrangement (1200) having an energizable motor coil (1240) for oscillating the scan element (2220) to sweep the light beam in a scan across the indicia (170),
wherein the drive arrangement further comprises:
a) a digital controller (1210) for producing a digital drive signal (1215);
b) a digital-to-analog converter (1220) connected to the controller (1210) for converting the digital drive signal (1215) to an analog control voltage signal (1225); and
c) a pulse width modulation regulator (1230) connected to the converter (1220) for generating a current drive signal (1235) which energizes the coil (1240) and creates a magnetic field that causes the scan element (2220) to oscillate.

2. The scanner of claim 1, wherein the controller (1210) includes a microprocessor (1211) operatively connected to a look-up table (1212) having initial baseline values that determine parameters of the scan.

3. The scanner of claim 2, and further comprising an amplifier (1250) for amplifying the current drive signal (1235) to generate an analog feedback signal (1255), and an analog-to-digital converter (1214) for converting the analog feedback signal (1225) to a digital feedback signal for the microprocessor (1211).

4. The scanner of claim 3, and further comprising a temperature sensor (1260) for sensing the ambient temperature of the motor coil (1240) and for sending an analog temperature signal to the analog-to-digital converter (1214) for conversion to a digital temperature signal for the microprocessor (1211).

5. The scanner of claim 1, wherein the regulator (1230) includes a comparator (1231) having a non-inverting input to which the analog control voltage signal (1225) is applied, and an inverting input to which a current feedback signal (1232) generated by a current sensor (1242) from the current drive signal (1235) is applied.

6. The scanner of claim 5, wherein the comparator (1231) controls two switches (1340, 1345) which are connected to opposite sides of the coil (1240).

7. The scanner of claim 1, wherein the digital drive signal (1215) includes a first component to sweep the scan element (2220) in a first direction, and a second component to move the scan element (2220) in a second direction perpendicular to the first direction.

8. The scanner of claim 1, wherein the regulator (1230) stops energizing the coil (1240) and allows the scan element (2220) to oscillate at its resonant frequency.

9. A method of electro-optically reading coded indicia (170) by oscillating a scan element (2220) that directs a light beam to the indicia (170), and by energizing a motor coil (1240) that oscillates the scan element (2220) to sweep the light beam in a scan across the indicia (170),
wherein the method comprises the steps of:
a) producing a digital drive signal (1215) from a digital controller (1210);
b) converting the digital drive signal (1215) to an analog control voltage signal (1225) by connecting a digital-to-analog converter (1220) to the controller (1210); and
c) generating a current drive signal (1235) for energizing the coil (1240) and creating a magnetic field for causing the scan element (2220) to oscillate by connecting a pulse width modulation regulator (1230) to the converter (1220).

## Patentansprüche

1. Scanner (100) zum elektro-optischen Lesen codierter (Kenn-)Zeichen (170), wobei der Scanner ein schwingbares Scan-Element (2220) zum Richten eines Lichtstrahls auf die (Kenn-)Zeichen (170) sowie eine Antriebsanordnung (1200) aufweist, wobei die Antriebsanordnung eine erregbare Motorspule (1240) besitzt zum Schwingen des Scan-Elements (2220), um den Lichtstrahl in einer Überstreichung bzw. einem Scan-Vorgang über die (Kenn-)Zeichen (170) zu streichen, wobei die Antriebsanordnung Folgendes aufweist:
a) eine digitale Steuereinrichtung bzw. einen digitalen Controller (1210) zum Erzeugen eines digitalen Antriebssignals (1215);
b) einen Digital-zu-Analog-Wandler (1220), der mit dem Controller (1210) verbunden ist, zum Umwandeln des digitalen Antriebssignals (1215) in ein analoges Steuerspannungssignal (1225); und
c) einen Pulsbreitenmodulationsregler (1230), der mit dem Wandler (1220) verbunden ist, zum Erzeugen eines Strom-Treibersignals (1235), das die Spule (1240) erregt und ein Magnetfeld erzeugt, das bewirkt, dass das Scan-Element (2220) schwingt.

2. Scanner gemäß Anspruch 1, wobei der Controller (1210) einen Mikroprozessor (1211) umfasst, der betriebsmäßig mit einer Nachschlagetabelle (1212) verbunden ist, welche Anfangswerte umfasst, die Scan-Parameter bestimmen.

3. Scanner gemäß Anspruch 2, wobei der Scanner ferner Folgendes aufweist: einen Verstärker (1250) zum Verstärken des Strom-Treibersignals (1235), um ein analoges Rückkopplungssignal (1255) zu erzeugen, und einen Analog-zu-Digital-Wandler (1214) zum Umwandeln des analogen Rückkopplungssignals (1225) in ein digitales Rückkopplungssignal für den Mikroprozessor (1211).

4. Scanner gemäß Anspruch 3, wobei der Scanner ferner Folgendes aufweist: einen Temperatursensor (1260) zum Abfühlen der Umgebungstemperatur der Motorspule (1240) und zum Senden eines analogen Temperatursignals an den Analog-zu-Digital-Wandler (1214) zur Umwandlung in ein digitales Temperatursignal für den Mikroprozessor (1211).

5. Scanner gemäß Anspruch 1, wobei der Regler (1230) einen Komparator (1231) umfasst mit einem nicht-invertierenden Eingang, an den das analoge Steuerspannungssignal (1225) angelegt ist, und mit einem invertierenden Eingang, an den ein Stromrückkopplungssignal (1232) angelegt ist, das von einem Stromsensor (1242) aus dem Stromantriebssignal (1235) erzeugt wird.

6. Scanner gemäß Anspruch 5, wobei der Komparator (1231) zwei Schalter (1340, 1345) steuert, die mit gegenüberliegenden Seiten der Spule (1240) verbunden sind.

7. Scanner gemäß Anspruch 1, wobei das digitale Treibersignal (1215) eine erste Komponente umfasst, um das Scan-Element (2220) in einer ersten Richtung zu schwenken bzw. zu scannen, und eine zweite Komponenten umfasst, um das Scan-Element (2220) in einer zweiten Richtung senkrecht zu der ersten Richtung zu bewegen.

8. Scanner gemäß Anspruch 1, wobei der Regler (1230) die Erregung der Spule (1240) beendet und es dem Scan-Element (2220) gestattet, mit ihrer eigenen Resonanzfrequenz zu schwingen.

9. Verfahren zum elektro-optischen Lesen codierter (Kenn-)Zeichen (170) durch schwingen eines Scan-Elements (2220), das einen Lichtstrahl zu den (Kenn-)Zeichen (170) richtet, und durch Erregen einer Motorspule (1240), die das Scan-Element (2220) schwingt, um den Lichtstrahl in einer Überstreichung bzw. einem Scan-Vorgang über die (Kenn-)Zeichen (170) hinweg zu streichen,
wobei das Verfahren die folgenden Schritte aufweist:
a) Erzeugen eines digitalen Treibersignals (1215) mit einer digitalen Steuereinrichtung bzw. einem digitalen Kontroller (1210);
b) Umwandeln des digitalen Treibersignals (1215) in ein analoges Steuerspannungssignal (1225) durch Verbinden eines Digital-zu-Analog-Wandlers (1220) mit dem Kontroller (1210); uns
c) Erzeugen eines Stromtreibersignals (1235) zum Erregen der Spule (1240) und zum Erzeugen eines Magnetfelds, um zu bewirken, dass das Scan-Element (2220) schwingt, und zwar durch Verbinden eines Pulsbreitenmodulationsreglers (1230) mit dem Wandler (1220).

## Revendications

1. Système de balayage (100) pour lire de manière électro-optique de repères codés (170), et comprenant un élément de balayage pouvant être amené à osciller (2220) pour diriger un faisceau lumineux vers les repères (170), et un agencement d'entraînement (1200) comportant une bobine de moteur excitable (1240) pour faire osciller l'élément de balayage (2220) pour balayer avec le faisceau lumineux les repères (170), dans lequel l'agencement d'entraînement comprend en outre :
a) un contrôleur numérique (1210) pour produire un signal pilote numérique (1215);
b) un convertisseur numérique-analogique (1220) connecté au contrôleur (1210) pour convertir le signal pilote numérique (1215) en un signal de tension de commande analogique (1225) ; et
c) un régulateur à modulation de largeur d'impulsions (1230) connecté au convertisseur (1220) pour produire un signal pilote de courant (1235) qui excite la bobine (1240) et crée un champ magnétique qui amène l'élément de balayage (2220) à osciller.

2. Système de balayage selon la revendication 1, dans lequel le contrôleur (1210) comprend un microprocesseur (1211) connecté à un tableau de correspondance (1212) comportant des valeurs de référence initiales qui déterminent des paramètres du balayage.

3. Système de balayage selon la revendication 2, comprenant en outre un amplificateur (1250) pour amplifier le signal pilote de courant (1235) pour produire un signal de rétroaction analogique (1255), et un convertisseur analogique-numérique (1214) pour convertir le signal de rétroaction analogique (1225) en un signal de rétroaction numérique pour le microprocesseur (1211).

4. Système de balayage selon la revendication 3, comprenant en outre un capteur de température (1260) pour détecter la température ambiante de la bobine de moteur (1240) et pour envoyer un signal de température analogique au convertisseur analogique-numérique (1214) pour qu'il soit converti en un signal de température numérique pour le microprocesseur (1211).

5. Système de balayage selon la revendication 1, dans lequel le régulateur (1230) comprend un comparateur (1231) comportant une entrée non-inverseuse sur laquelle est appliqué le signal de tension de commande analogique (1225), et une entrée inverseuse sur laquelle est appliqué un signal de rétroaction de courant (1232) produit par un détecteur de courant (1242) à partir du signal pilote de courant (1235).

6. Système de balayage selon la revendication 5, dans lequel le comparateur (1231) commande deux interrupteurs (1340, 1345) qui sont connectés à des côtés opposés de la bobine (1240).

7. Système de balayage selon la revendication 1, dans lequel le signal pilote numérique (1215) comprend une première composante pour effectuer un balayage avec l'élément de balayage (2220) dans une première direction, et une seconde composante pour déplacer l'élément de balayage (2220) dans une seconde direction perpendiculaire à la première direction.

8. Système de balayage selon la revendication 1, dans lequel le régulateur (1230) cesse d'exciter la bobine (1240) et permet à l'élément de balayage (2220) d'osciller à sa fréquence de résonance.

9. Procédé de lecture électro-optique de repères codés (170) par oscillation d'un élément de balayage (2220) qui dirige un faisceau lumineux vers les repères (170), et en excitant une bobine de moteur (1240) qui fait osciller l'élément de balayage (2220) pour effectuer un balayage avec le faisceau lumineux des repères (170), dans lequel le procédé comprend les étapes suivantes :
a) produire un signal pilote numérique (1215) à partir d'un contrôleur numérique (1210) ;
b) convertir le signal pilote numérique (1215) en un signal de tension de commande analogique (1225) en connectant un convertisseur numérique-analogique (1220) au contrôleur (1210) ; et
c) produire un signal pilote de courant (1235) pour exciter la bobine (1240) et créer un champ magnétique pour amener l'élément de balayage (2220) à osciller en connectant un régulateur à modulation de largeur d'impulsions (1230) au convertisseur (1220).
